# EUROPÄISCHE PATENTSCHRIFT

(11) **EP 1 694 188 B1**
(45) Veröffentlichungstag und Bekanntmachung des Hinweises auf die Patenterteilung: **27.04.2011**
(21) Anmeldenummer: 04804073.7
(22) Anmeldetag: 17.12.2004
(51) Int. Cl.: A47L 9/14, B01D 39/02, B01D 39/16

(54) **STAUBSAUGERBEUTEL UND VERFAHREN ZUR STANDZEITVERLÄNGERUNG VON STAUBSAUGERBEUTELN**
VACUUM CLEANER BAG AND METHOD FOR EXTENDING THE SERVICE LIFE THEREOF
SAC A POUSSIERE D'ASPIRATEUR ET PROCEDE PERMETTANT DE PROLONGER LA DUREE D'UTILISATION D'UN TEL SAC

(30) Priorität: 19.12.2003 DE 10359948
(43) Veröffentlichungstag der Anmeldung: 30.08.2006
(73) Patentinhaber: Eurofilters N.V., 3900 Overpelt (BE)
(72) Erfinder: SCHULTINK, Jan c/o Eurofilters N.V., B-3900 Overpelt (BE); SAUER, Ralf c/o Eurofilters N.V., B-3900 Overpelt (BE)
(74) Vertreter: Pfenning, Meinig & Partner GbR
(86) Internationale Anmeldenummer: PCT/EP2004/014473
(87) Internationale Veröffentlichungsnummer: WO 2005/060807

(56) Entgegenhaltungen:
- DE-A1- 3 800 252
- DE-A1- 10 030 958
- DE-B- 1 151 905

## Beschreibung

Die Erfindung betrifft einen Staubsaugerbeutel aus einem von Luft durchströmbaren Filtermaterial, der einen abgeschlossenen Staubsammelraum bildet, wobei sich der Staubsaugerbeutel dadurch auszeichnet, dass ein unter einer gegebenen Luftströmung aufwirbelbares Material im Staubsammelraum enthalten ist. Die Erfindung betrifft weiterhin ein Verfahren zur Standzeitverlängerung von Staubsaugerbeuteln, bei dem ein wie vorstehend beschriebener Staubsaugerbeutel eingesetzt wird.

Für Staubsaugerbeutel werden zahlreiche unterschiedliche Filtermaterialien und Materialkombinationen eingesetzt. Neben den klassischen Papier oder Papier-Tissue-Tüten sind auch Tüten aus Kombinationen von Papier mit Kunststoffvlies oder auch vollständig aus Vliesstoffen bestehende Staubsaugertüten bekannt. So beschreibt z.B. die EP-A-0 338 479 eine Papier-Meltblown-Kombination und die EP 0 161 790 einen dreilagigen Spunbond-Meltbond-Spunbond-Verbund (SMS). Solche Filtermaterialien mit einer Feinfilterlage aus Meltblown verbessern die Abscheideleistung verglichen mit einer einlagigen Papiertüte oder eine zweilagigen Papier-Tissue-Tüte erheblich. In den letzten Jahren sind zusätzlich vermehrt vielschichtige Verbundmaterialien unterschiedlicher Zusammensetzung bekannt geworden, durch die insbesondere die Staubspeicherkapazität verbessert werden konnte. In der EP-A-0 960 645 wird ein derartiges Material aus unterschiedlichen Vlieslagen und einer Feinfilterlage beschrieben.

Die Verwendung dieser neuartigen Verbundmaterialien zur Herstellung von Staubsaugerbeuteln hat dazu geführt, dass eine Standzeitverlängerung erreicht werden konnte.

Die mit diesen neuartigen Filtertüten erzielbaren Standzeitverlängerungen sind jedoch im Sinne einer optimalen Ausnutzung der Filtertüte insbesondere bei einer hohen Feinstaubbelastung des Filters noch verbesserungsbedürftig. Desweiteren ist es wünschenswert auch die Standzeit von Filtern aus einfachen zusammengesetzten Filtermedien deutlich zu verlängern.

Weiterhin ist aus der DE-OS 27 33 861 A eine Filteranordnung für einen Staubsauger bekannt. Bei der dort beschriebenen Filteranordnung ist in einem Behältnis, das aus einem formstabilen Material besteht und das von zwei Siebböden begrenzt wird, ein oberflächenaktives Material enthalten. Diese Filteranordnung wird deshalb auch gemäß der Lehre der Offenlegungsschrift als Vorfilter für einen Staubsauger verwendet, d.h. die Anordnung aus einem formstabilen Material wird dem eigentlichen Staubsaugerbeutel vorgeschaltet.

Wesentlicher Nachteil dieser Anordnung ist es aber, dass diese Vorrichtung nur geeignet ist, um eventuell anfallenden Feinstaub herauszufiltern. Für den Fall, dass neben Feinstaub auch andere Staubfraktionen vorliegen, ist diese Filteranordnung nicht zu verwenden, da in diesen Fällen die das Behältnis begrenzenden Siebböden zugesetzt würden.

Dies gilt insbesondere auch für typischen Hausstaub, der sich durch einen erheblichen Faseranteil auszeichnet. Der sich auf dem anströmseitigen Siebboden bildende Filterkuchen würde schon nach kurzer Zeit ein Weiterarbeiten unmöglich machen.

Ungünstig ist weiterhin, dass bei dieser Anordnung nur recht große Kugeln mit entsprechend kleiner Oberfläche und dementsprechend geringem Bindevermögen für Feinstaub eingesetzt werden können. Kleinere Kugeln müssten mit noch feineren Sieben in dem vorgeschalteten Filter zurückgehalten werden, was zu noch größeren Problemen mit groben/faserhaltigen Stäuben führt.

Die. DE 1151 905 beschreibt einen Papierfilterbentel, wobei dort vorgeschlagen wird, daß lose Fildermaterialien in den Bentel eingebracht werden, die dann durch die einströmende luft im Bentel verteilt werden so daß sich dann eine gleichmäßiche Schicht auf der Innenseite des Bentels bildet.

Aufgabe der vorliegenden Erfindung ist es deshalb, einen Staubsaugerbeutel anzugeben, der gegenüber den bekannten Staubsaugerbeuteln sowohl aus Papier wie auch aus Papier-Meltblown-Kombinationen bzw. Spunbond-Meltbond-Spunpond-Verbunden (SMS) und Vliestüten mit einer Kapazitätslage eine wesentliche größere Staubmenge aufnehmen kann ohne dass der Druckverlust zu stark ansteigt. Eine weitere Aufgabe der vorliegenden Erfindung ist es, ein Verfahren anzugeben, das zu einer Standzeitverlängerung von Staubsaugerbeuteln führt.

Die Aufgabe wird in Bezug auf den Staubsaugerbeutel durch die Merkmale des Patentanspruchs 1 und im Bezug auf das Verfahren zur Standzeitverlängerung durch die Merkmale des Anspruchs 14 gelöst. Die Unteransprüche zeigen vorteilhafte Weiterbildungen auf.

Es hat sich dabei völlig überraschend gezeigt, dass dann, wenn in dem Staubsaugerbeutel, der für sich gesehen einen abgeschlossenen Staubsammelraum bilden muss, ein unter der gegebenen Luftströmung aufwirbelbares Material enthalten ist, sich die Menge, die an Staub aufgenommen werden kann, bis um den Faktor 5 gegenüber den herkömmlichen Filtertüten erhöht. Damit können z.B. in einem Staubsaugerbeutel für Staubsauger bei einem Volumens des Filters von ca. 3 1 mehr als 350 g Staub aufgenommen werden, wohingegen in einen herkömmlichen Staubsaugerbeutel des Standes der Technik, sei er aus Papier oder aus SMS-Verbunden gefertigt, nur maximal 80 bis 100 g Staub aufnehmbar sind. Offensichtlich wird bei den Staubsaugerbeuteln nach der Erfindung das in dem Staubsaugerbeutel enthaltene aufwirbelbare Material im Betriebszustand unter der gegebenen Luftströmung in Zirkulation gehalten und kann somit den eingesaugten Staub bereits im Luftraum binden. Dadurch wird offensichtlich ein Verstopfen des Wandmaterials verhindert. Hierfür spricht, dass nicht nur Staubsaugerbeutel, die aus Papier gefertigt sind, sondern auch die bekannten SMS-Verbundmaterialien und die durch das aufwirbelbare Material in Bezug auf ihre Standzeit deutlich verbessert werden können. Bei dem aufwirbelbaren Material (Fasern) nach der Erfindung hat es sich dabei als vorteilhaft erwiesen, wenn dieses ein Schüttvolumen von 1 cm³/g bis 100 cm³/g besonders bevorzugt von 3 cm³/g bis 60 cm³/g aufweist. Die Schüttvolumenbestimmung wurde wie folgt durchgeführt: 5 g des zu untersuchenden Schüttguts werden in einen Zylinder mit 48 mm Durchmesser gegeben. Das Material wird mit einer Platte von 250 g vollständig belastet. Die sich einstellende Höhe des Schüttguts wird abgelesen. Daraus wird das Volumen des Schüttguts und das Schüttvolumen in cm³/g berechnet.

Die Fasern sind Chemiefasern und/oder Naturfasern . Als Beispiele für Chemiefasern wären dabei cellulosische Fasern, wie Viskose, zu nennen. Geeignete Beispiele für die synthetischen Fasern sind: Polyolefine, Polyester, Polyamide, Polyacrylnitril und Polyvinylalkohol.

Wirtschaftlich vorteilhaft ist auch die Verwendung von Reißfasern aus Alttextilien bzw. Produktionsabfällen.

Geeignet als aufwirbelbare Materialien sind weiterhin Naturfasern, wie Cellulose, Holzfaserstoffe, Kapok, Flachs, Jute, Manilahanf, Kokos, Wolle, Baumwolle, Kenaf, Abaca, Maulbeerbast und Fluffpulp.

Die Fasern können weiterhin glatt, verzweigt und/oder gekrimpt sein. Vorteilhaft sind auch hohle, texturierte und Fasern mit nicht runden Querschnitten (z.B. trilobal).

In Versuchen konnte gezeigt werden, dass auch die Faserlänge einen Einfluss auf die Standzeit der jeweiligen Filtertüte ausübt. Generell kann gesagt werden, dass die Fasern eine Länge von 0,3 und 100 mm aufweisen können, jedoch ist es bevorzugt, wenn die Fasern 0,5 bis 20 mm, ganz besonders bevorzugt 1 bis 9,5 mm lang sind. Insbesondere unter Einhaltung der letztgenannten Größenbedingungen für die Fasern werden ausgezeichnete Ergebnisse erzielt.

Eine weitere bevorzugte Ausführungsform betrifft dann noch die Maßnahme, dass die aufwirbelbaren Materialien eine elektrostatisch geladene Oberfläche aufweisen. Die Aufladung der Fasern kann nach dem bekannten Verfahren an der Folie oder den Filamenten erfolgen. Bei der Verwendung triboelektrischer Materialkombinationen, entsteht eine Ladung entweder durch Reibung der Fasern untereinander oder durch Reibung der Fasern mit dem Filtermaterial (Innenseite Beutel). Durch diese Ausgestaltung wird eine Verbesserung des Aufnahmevermögens von Staub für die in der Filtertüte zirkulierenden Materialien erreicht. Auch ist es möglich, die Materialien zusätzlich mit einer funktionalisierten Oberfläche zu versehen. Als funktionalisierte Oberflächen können dabei Beschichtungen der Fasern eingesetzt werden, mit denen das Adsorptionsvermögen der Fasern noch gesteigert werden kann.

Die Staubsaugerbeutel nach der Erfindung sollten bevorzugt so dimensioniert sein, dass sie mit einem Volumenstrom von 10 m³/h bis 400 m³/h durchströmbar sind. In Versuchen konnte die Anmelderin weiterhin zeigen, dass es günstig ist, wenn pro 1000 cm³ Volumen des Staubsaugerbeutels bevorzugt 5 bis 15 g, des aufwirbelbaren Materials enthalten sind.

Als Filtermaterial für den Staubsaugerbeutel nach der Erfindung kommen an und für sich alle aus dem Stand der Technik bekannten Materialien in Frage. Als Beispiele wäre hierzu zu nennen Papier und Vliesmaterialien, wie auch die eingangs beschriebenen SMS-Verbunde.

Die Erfindung betrifft weiterhin ein Verfahren zur Standzeitverbesserung von Staubsaugerbeuteln. Gemäß dem erfindungsgemäßen Verfahren wird dabei vorgeschlagen, dass Staubsaugerbeutel eingesetzt werden, die wie vorstehend beschrieben aufgebaut sind. Das Verfahren wird bevorzugt mit einem Volumenstrom von 10 m³/h bis 400 m³/h betrieben. Bei dem Verfahren wird dabei bevorzugt so vorgegangen, dass vor Beginn des erstmaligen Saugvorgangs oder bei Beginn des Saugvorgangs das aufwirbelbare Material in den Staubsammelraum eingebracht wird. Es ist somit vorgesehen, dass in dem Staubsaugerbeutel von vornherein bereits das Material enthalten ist, d.h. das Material wurde bereits bei der Herstellung des Staubsaugerbeutels mit eingebracht oder aber das Material wird nachträglich in den Staubsaugerbeutel eingebracht, d.h. z.B. eingesaugt. Wesentlich für das Verfahren ist in jedem Fall immer, dass das Material, das in dem Staubsaugerbeutel enthalten ist, unter den Betriebsbedingungen, d.h. unter dem gegebenen Volumenstrom, aufgewirbelt ist und in Zirkulation gehalten werden kann. Es wird weiter vorgeschlagen, dass das aufwirbelbare Material in einer Umhüllung vorliegt. Die Umhüllung muss dabei selbstverständlich so ausgeführt sein, dass sie unter dem gegebenen Volumenstrom im Staubsaugerbeutel zerstört wird, so dass das aufwirbelbare Material in loser Form im Staubsaugerbeutel vorliegt und unter den gegebenen Bedingungen dann im Staubsaugerbeutel zirkulieren kann.

Bei dem Verfahren handelt es sich bevorzugt um ein Verfahren zum Staubsaugen mit einem Bodenstaubsauger oder einem Handstaubsauger.

Folgender Gegenstand der Beschreibung und der Figuren ist nicht Teil der Erfindung.

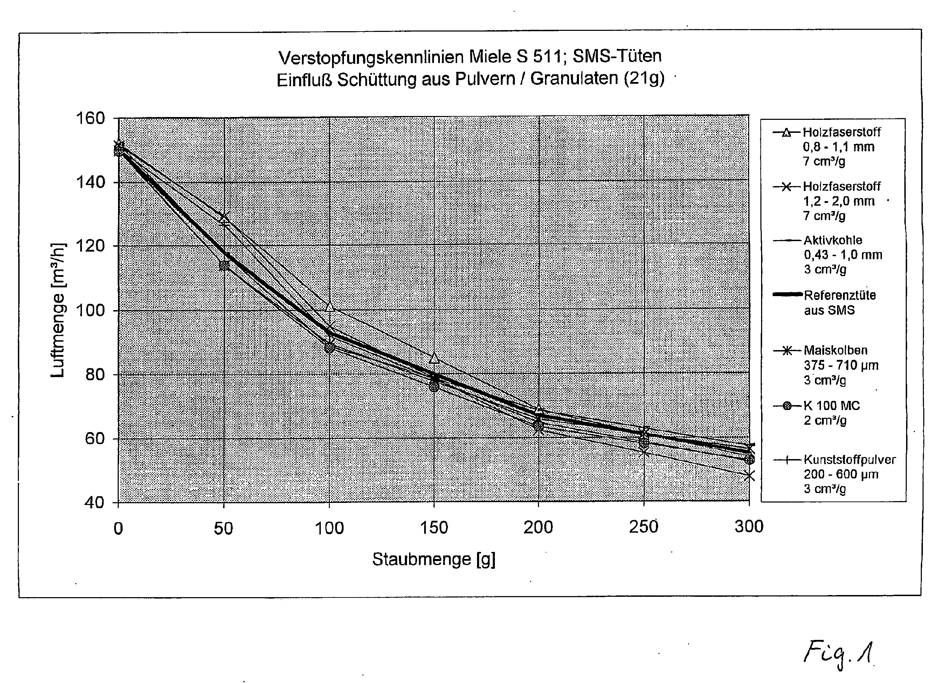

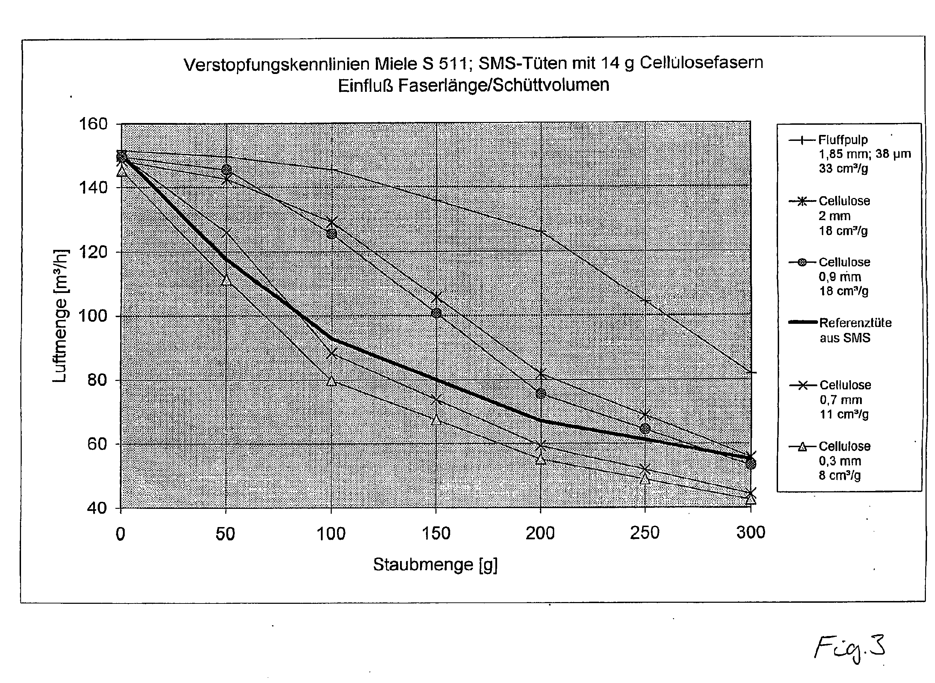

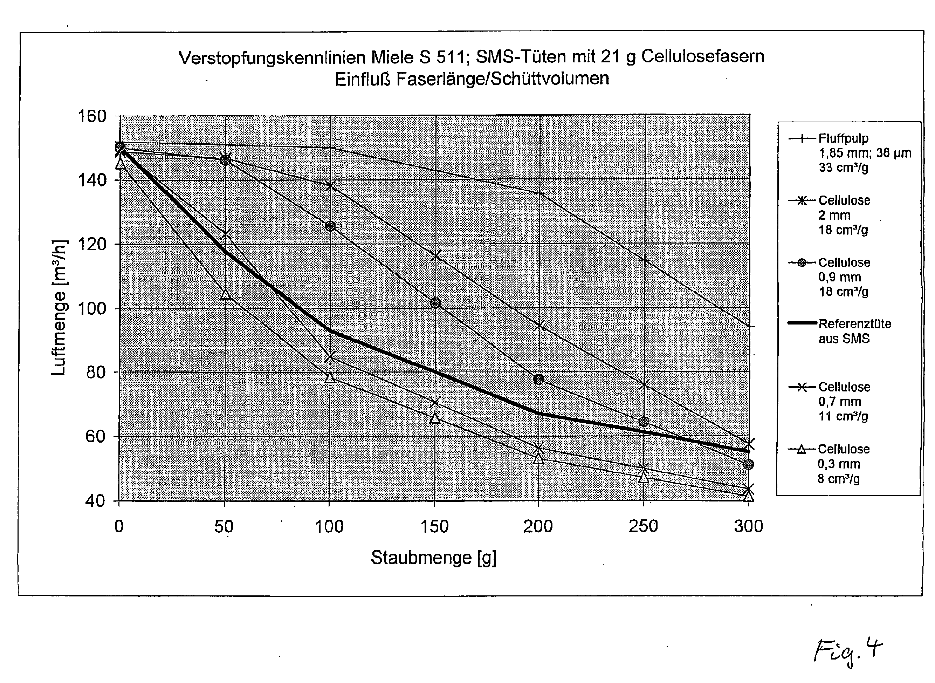

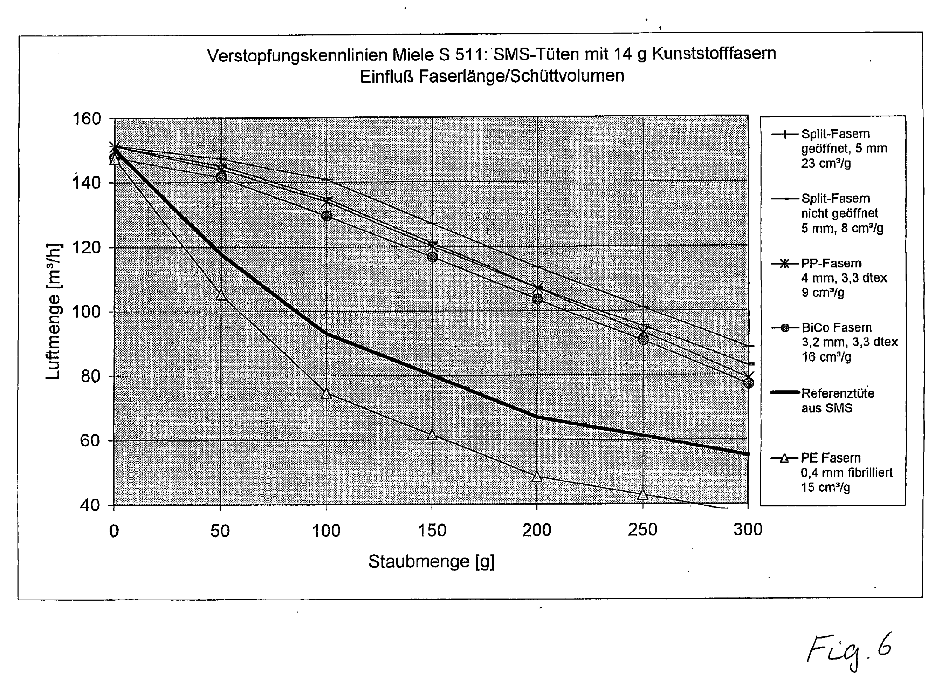

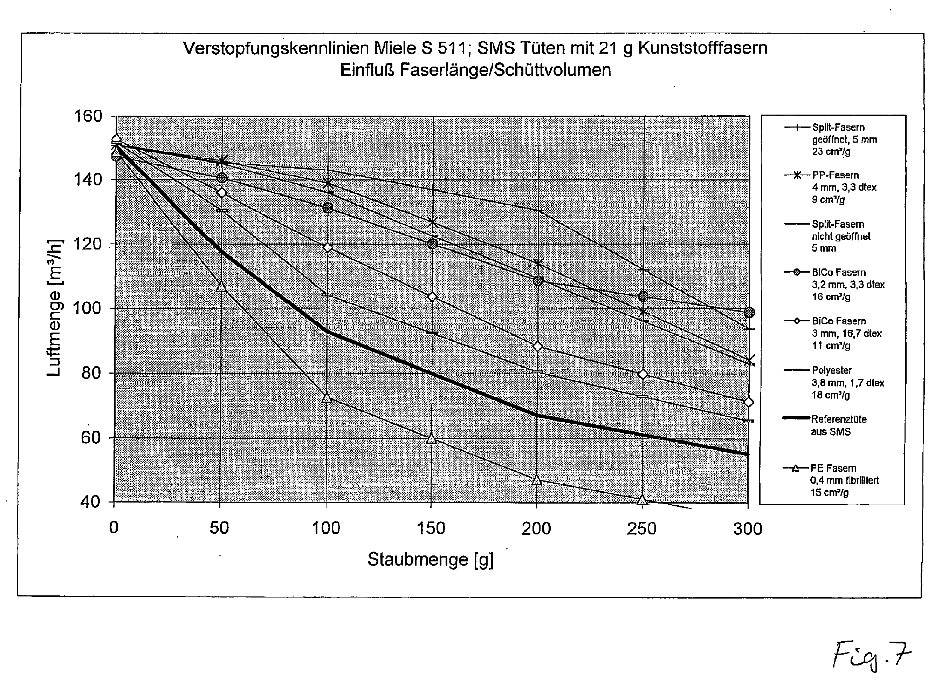

Die Erfindung wird nachfolgend anhand der Figuren 1 bis 11 näher erläutert. Die Figuren 1 bis 10 betreffen Verstopfungskennlinien, die den Einfluss von verschiedenen Fasern und Flocken zeigen.

Zur Messung der Verstopfungskennlinie wurde Mineralstaub Typ 44956 von der Fa. Normsand GmbH, Beckum verwendet.

Figur 1 zeigt Verstopfungskennlinien, die mit einem Miele Staubsauger S511 aufgenommen worden sind, bei dem als Referenztüte eine Staubsaugertüte aus SMS-Material verwendet worden ist. Bei diesem ersten Versuch wurde dabei eine Schüttung aus Pulvern oder Granulaten, wie aus der Legende zu entnehmen, in die Staubsaugertüte eingefüllt und die Verstopfungskennlinien aufgenommen und mit der Verstopfungskennlinie einer Referenztüte aus SMS verglichen. Wie aus Figur 1 zu entnehmen ist, zeigte es sich dabei, dass die dort verwendeten Pulver und Granulate in einer Menge von 21 g keinerlei Einfluss auf die Verstopfungskennlinie ausgeübt haben. Als Material wurde dabei unter anderem auch Aktivkohle verwendet. Die Verwendung von Aktivkohle in Staubsaugerbeutel ist bereits aus der WO 01/08543 A1 bekannt. Dort wird nämlich vorgeschlagen, Aktivkohle als Geruchsadsorbens in eine Staubsaugertüte einzubringen. Der wesentliche Kern der Lehre der vorstehend beschriebenen WO-Schrift geht dahin, dass die in der Filtertüte enthaltene Schüttung aus Aktivkohle als Adsorbens für Geruchsstoffe wirkt. Wie die Versuche gezeigt haben, hat jedoch dieses Füllmaterial keinerlei Einfluss auf die Standzeit.

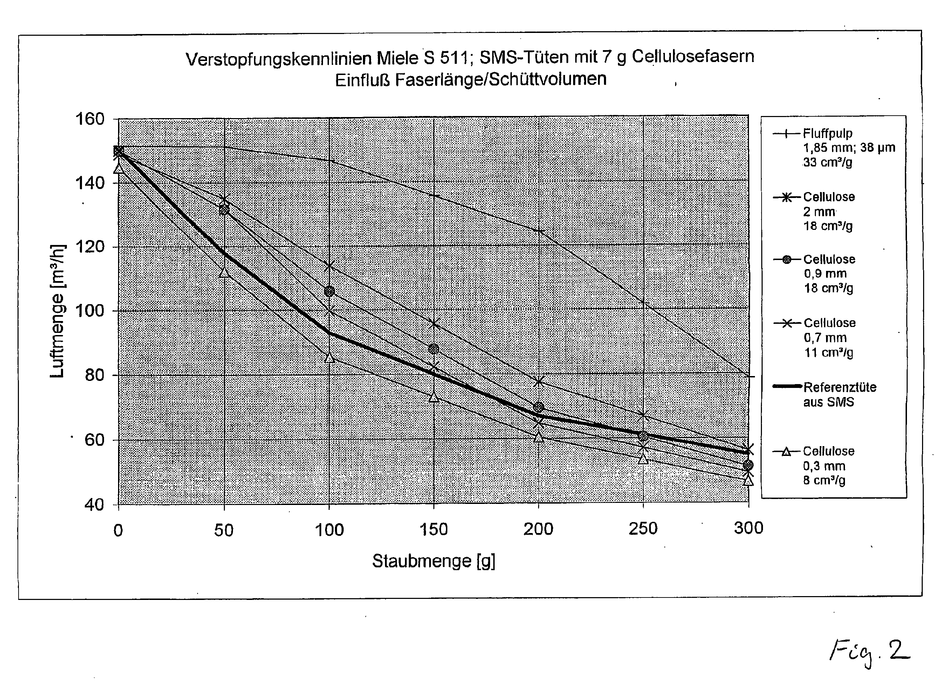

Die Figuren 2 bis 4 zeigen den Einfluss der Faserlänge und des Schüttgewichts von Cellulosefasern in einer SMS-Tüte im Vergleich zu einer Referenztüte aus SMS ohne entsprechende Fasern. Wie aus Figur 2 bis 4 zu entnehmen ist, wird durch die Verwendung der in der Legende angegebenen Fasern aus Cellulose bereits eine deutliche Standzeitverlängerung gegenüber einer Referenztüte aus SMS ohne aufwirbelbare Materialien erreicht. Die besten Ergebnisse werden dabei mit Fluffpulp und einer mittleren Faserlänge von 1,85 mm erzielt. Mit einem derartigen aufwirbelbaren Material ist es danach möglich, die Standzeit um ein vielfaches gegenüber einer Referenztüte aus SMS zu verlängern. Im Regelfall wird bei den Staubsaugern des Standes der Technik dann, wenn die Luftmenge auf etwa 80 m³/h zurückgegangen ist, eine Anzeige geschaltet, dass die.Filtertüte zu erneuern ist. Bei einer Filtertüte des Standes der Technik aus SMS-Material ist somit bei einer Staubmenge von 150 g bereits ein Filterwechsel notwendig. Wenn eine erfindungsgemäße Filtertüte mit einer Schüttung aus Fluffpulp eingesetzt wird, ist selbst bei einer Staubmenge von 300 g noch nicht die kritische Luftmenge von 80 m³/h erreicht. Beim Schüttvolumen sind im Beispielsfall Werte von 10 bis 40 cm³/g besonders günstig.

Wie aus den Figuren 2 bis 4 weiterhin zu entnehmen ist, übt auch die Menge des Materials einen Einfluss aus. Generell kann gesagt werden, dass für dieses Beispiel eine Steigerung der Menge von 7 über 14 zu 21 g eine nochmalige Verbesserung erbringt. Eine SMS-Tüte mit 21 g Fluffpulp-Fasern weist danach die mit Abstand besten Ergebnisse auf.

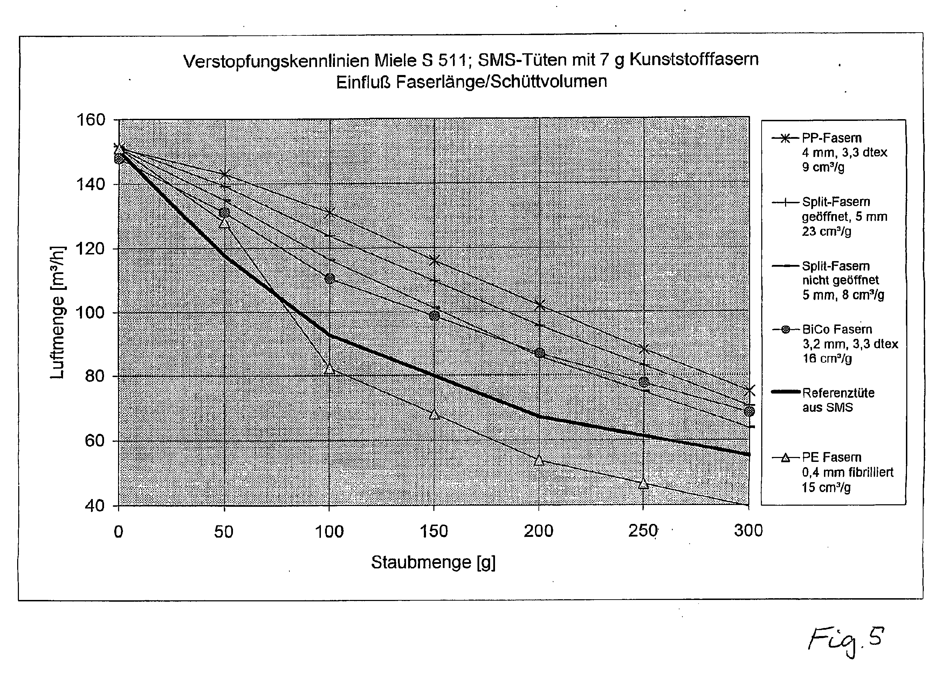

Die Figuren 5 bis 7 zeigen nun die Messergebnisse in Bezug auf Kunststofffasern. Auch hier zeigt sich wiederum deutlich, dass beim Staubsaugerbeutel nach der Erfindung der mit aufwirbelbaren Kunststofffasern gefüllt ist, sich eine deutliche Steigerung der Standzeit erreichen lässt. Wie aus dem Vergleich der Figuren 5 bis 7 hervorgeht, fällt eine Verbesserung mit steigendem Füllgewicht der Schüttung auf. Die besten Ergebnisse werden dabei mit 21 g Splitfasern geöffnet und einer Faserlänge von 5 mm erreicht. Ein derartiger Staubsaugerbeutel weist ebenfalls bei einer Staubmenge von 300 g noch lange nicht die kritische Luftmenge von 80 m³/h auf.

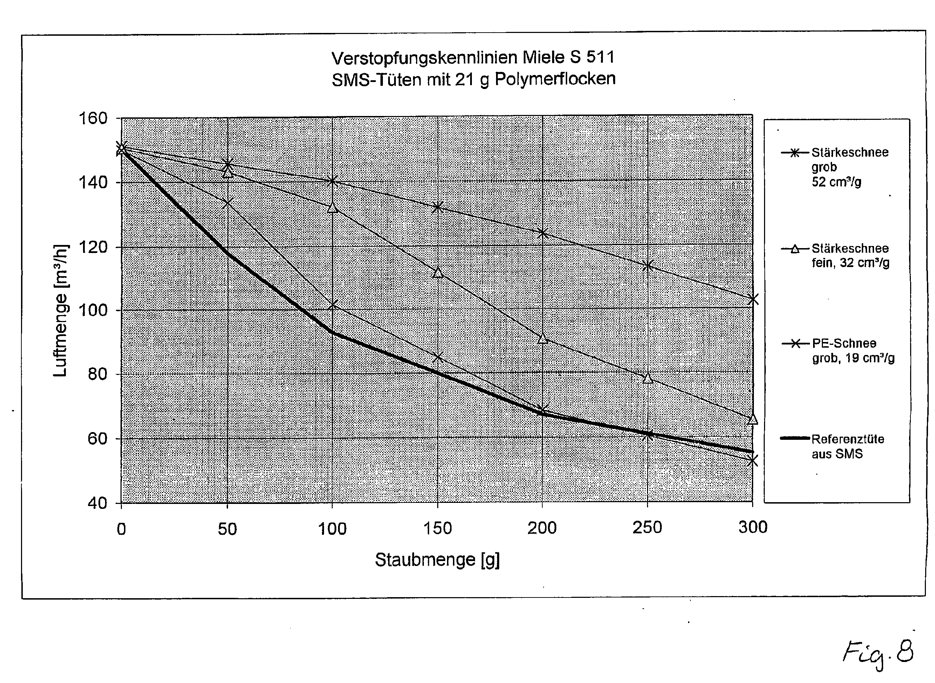

Figur 8 zeig nun Verstopfungskennlinien bei einer SMS-Tüte, die mit verschiedenen Polymerflocken gefüllt worden ist. Auch diese Ergebnisse zeigen, dass durch Staubsaugerbeutel mit Polymerflocken, insbesondere mit Stärkeflocken, eine deutliche Standzeitverlängerung erreicht wird. Die besten Ergebnisse wurden mit 21 g Stärkeflocken erreicht. Das Schüttvolumen war hier 52 cm³/g.

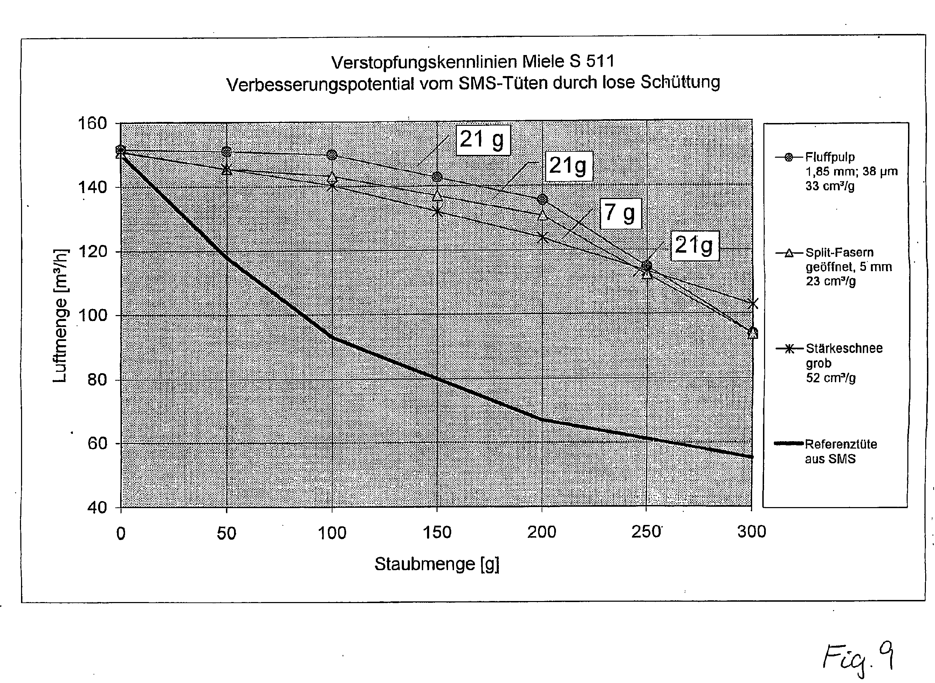

Figur 9 zeigt eine Zusammenstellung der Ergebnisse, wie vorstehend im Einzelnen erläutert, bei der die besten Ergebnisse der entsprechenden aufwirbelbaren Materialien in einer Grafik zusammengestellt worden sind. Danach werden überragende Ergebnisse erzielt, wenn in dem Staubsaugerbeutel 21 g Fluffpulp mit einer mittleren Faserlänge von 1,85 mm enthalten sind. Auch Splitfasern in einer Menge von ca. 21 g und einer mittleren Faserlänge von 5 mm zeigen überlegene Eigenschaften auf. Als weitergeeignet haben sich auch Stärkeflocken und PP-Fasern erwiesen.

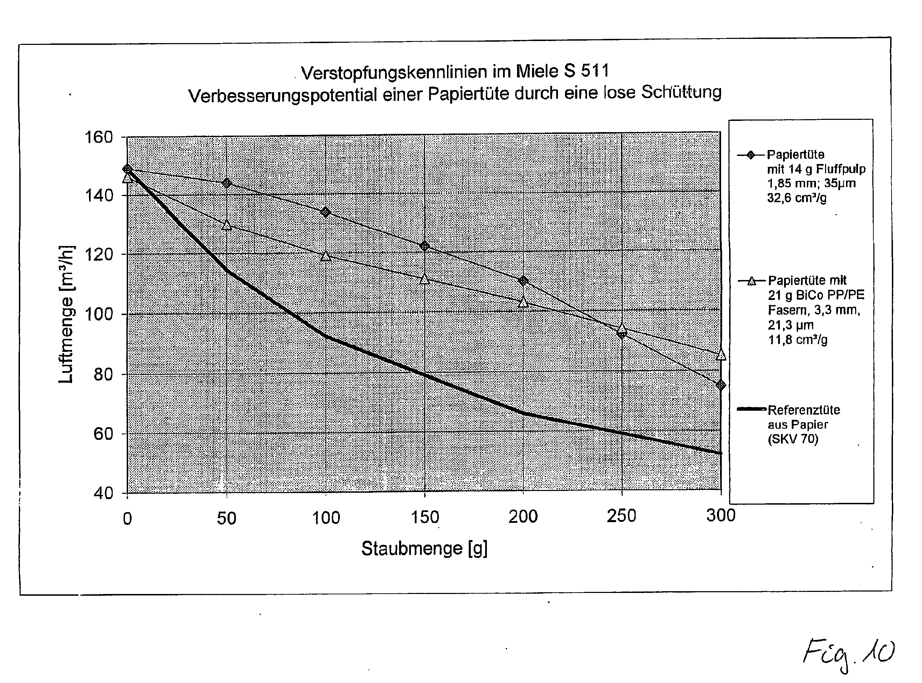

In Figur 10 ist das Verbesserungspotential einer Papiertüte durch die lose Schüttung, wie vorstehend bereits gezeigt.

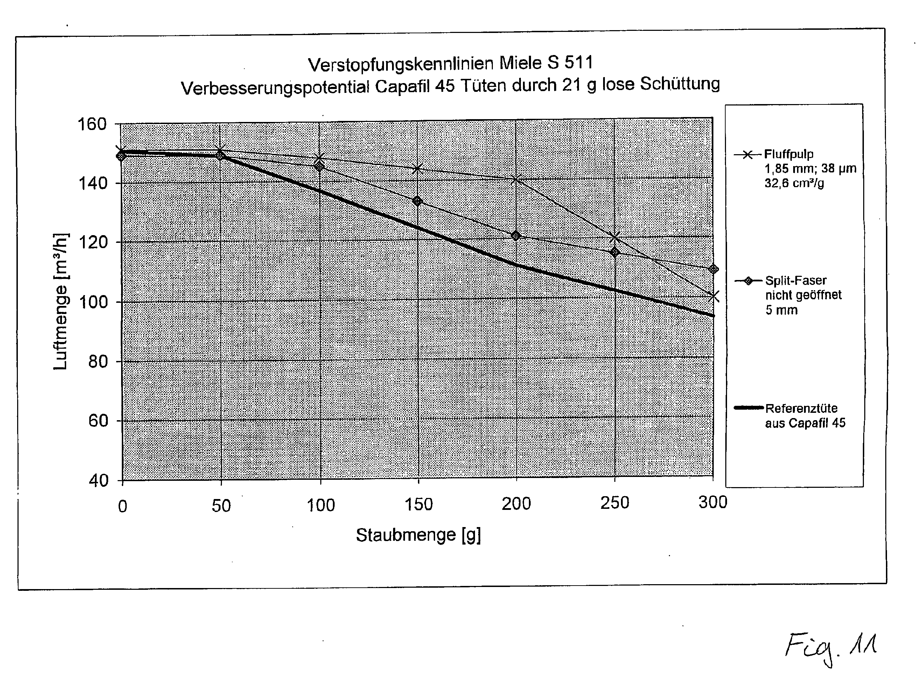

Letztlich zeigt Figur 11, dass selbst Staubsaugerbeutel aus neuartigen Filtermedien durch die erfindungsgemäßen Staubsaugerbeutel nochmals verbessert werden kann. In Figur 11 ist als Referenz eine Filtertüte Capatil 45 verwenden worden. Dieses Filtermaterial ist in der EP 1 198 280 B1 beschrieben. Durch den Einsatz von Fluffpulp 1,85 mm mit einem Schüttvolumen von 32,6 cm³/g lässt sich die Standzeit dieser Tüte nochmals verbessern.

## Patentansprüche

1. Staubsaugerbeutel aus einem von Luft durchströmbaren Filtermaterial, wobei im Staubsaugerbeutel unter einer gegebenen Luftströmung aufwirbelbare Fasern enthalten sind,
**dadurch gekennzeichnet,**
**dass** pro 1000 cm³ Volumen des Staubsaugerbeutels 1-30 g der aufwirbelbaren Fasern enthalten sind und die Fasern geladene und/oder triboelektrische Fasermischungen sind.

2. Staubsaugerbeutel nach Anspruch 1, **dadurch gekennzeichnet, dass** das aufwirbelbare Material ein Schüttvolumen von 5 cm³/g bis 100cm³/g aufweist.

3. Staubsaugerbeutel nach Anspruch 2, **dadurch** gekennzeichnen, dass die Fasern Chemiefasern und/oder Naturfasern sind.

4. Staubsaugerbeutel nach Anspruch 3, **dadurch gekennzeichnet, dass** die Chemiefasern cellulosische Fasern, wie Viskose und/oder synthetische Fasern sind.

5. Staubsaugerbeutel nach Anspruch 4, **dadurch gekennzeichnet, dass** die synthetischen Fasern ausgewählt sind aus Fasern aus Polyolefinen, Polyester, polyamiden, Polyacrylnitril und/oder Polyvinylalkohol.

6. Staubsaugerbeutel nach Anspruch 3, **dadurch gekennzeichnet, dass** die Naturfasern ausgewählt sind aus Cellulose, Holzfaserstoffe, Kapok, Flachs, Jute, Manilahanf, Kokos, Wolle, Baumwolle, Kenaf, Abaca, Maulbeerbast und/oder Fluffpulp.

7. Staubsaugerbeutel nach mindestens einem der Ansprüche 1 bis 6, **dadurch gekennzeichnet, dass** die Fasern glatt, verzweigt, gekrimpt, hohl und/oder texturiert sind und/oder einen nicht kreisförmigen (z.B. trilobalen) Querschnitt aufweisen.

8. Staubsaugerbeutel nach mindestens einem der Ansprüche 1 bis 7, **dadurch gekennzeichnet, dass** die Fasern eine mittlere Länge zwischen 0,3 mm und 100 mm, bevorzugt zwischen 0,5 und 20 mm aufweisen.

9. Staubsaugerbeutel nach Anspruch 8, **dadurch gekennzeichnet, dass** die Fasern eine mittlere Länge von 1 bis 9,5 mm aufweisen.

10. Staubsaugerbeutel nach mindestens einem der Ansprüche 1 bis 9, **dadurch gekennzeichnet**, das das aufwirbelbare Material elektrostatisch geladen ist.

11. Staubsaugerbeutel nach mindestens einem der Ansprüche 1 bis 10, **dadurch gekennzeichnet, dass** der Staubsaugerbeutel so dimensioniert und ausgelegt ist, dass er mit einem Volumenstrom von 10 m³/h bis 400 m³/h durchströmbar ist.

12. Staubsaugerbeutel nach mindestens einem der Ansprüche 1 bis 11, **dadurch gekennzeichnet, dass** pro 1000 cm³ 5 bis 15 g aufwirbelbares Material enthalten sind.

13. Staubsaugerbeutel nach mindestens einem der Ansprüche 1 bis 12, **dadurch gekennzeichnet, dass** das Filtermaterial ein ein- oder mehrschichtiges Papier und/oder Vliesmaterial ist.

14. Verfahren zur Standzeitverlängerung eines Staubsaugerbeutels, der mit einem vorgegebenen Volumenstrom betrieben wird, **dadurch gekennzeichnet, dass** mit einem Staubsaugerbeutel nach mindestens einem der Ansprüche 1 bis 13 gearbeitet wird.

## Claims

1. Vacuum cleaner bag made of an air-permeable filter material, the vacuum cleaner bag contains fibres which can be whirled up under a given air flow, **characterised in that**
the vacuum cleaner bag contains, per 1000 cm³ volume, 1 to 30 g of fibres which can be whirled up and the fibres are charged and/or triboelectric fibre mixtures.

2. Vacuum-cleaner bag according to claim 1, **characterised in that** the material which can be whirled up has a volume per mass unit of 5 cm³/g to 10 cm³/g_{.}

3. Vacuum-cleaner bag according to claim 2, **characterised in that** the fibres are chemical fibres and/or natural fibres.

4. Vacuum-cleaner bag according to claim 3, **characterised in that** the chemical fibres are cellulose fibres such as viscose and/or synthetic fibres.

5. Vacuum-cleaner bag according to claim 4, **characterised in that** the synthetic fibres are selected from fibres formed from polyolefins, polyester, polyamides, polyacrylonitrile and/or polyvinyl alcohol.

6. Vacuum-cleaner bag according to claim 3, **characterised in that** the natural fibres are selected from cellulose, wood fibre materials, kapok, flax, jute, Manila hemp, coco, wool, cotton, Kenaf, abaca, mulberry bast and/or fluff pulp.

7. Vacuum-cleaner bag according to at least one of claims 1 to 6, **characterised in that** the fibres are smooth, branched, crimped, hollow and/or textured and/or have a non-circular (e.g. trilobal) cross-section.

8. Vacuum-cleaner bag according to at least one of claims 1 to 7, **characterised in that** the fibres have a mean length of between 0.3 mm and 100 mm, preferably between 0.5 and 20 mm.

9. Vacuum-cleaner bag according to claim 8, **characterised in that** the fibres have a mean length of 1 to 9.5 mm.

10. Vacuum-cleaner bag according to at least one of claims 1 to 9, **characterised in that** the material which can be whirled up is electrostatically charged.

11. Vacuum-cleaner bag according to at least one of claims 1 to 10 , **characterised in that** the vacuum-cleaner bag is so dimensioned and designed that the volume flow rate through the bag can be 10 m³/h to 400 m³/h.

12. Vacuum-cleaner bag according to at least one of claims 1 to 11, **characterised in that** 5 to 15 g of material which can be whirled up are contained per 1000 cm³.

13. Vacuum-cleaner bag according to at least one of claims 1 to 12, **characterised in that** the filter material is a single-layer or multilayer paper and/or non-woven material.

14. Method for extending the service life of a vacuum-cleaner bag which is operated with a predetermined volume flow rate, **characterised in that** a vacuum-cleaner bag according to at least one of claims 1 to 13 is used.

## Revendications

1. Sac à poussière d'aspirateur constitué d'une matière filtrante perméable aux flux d'air et contenant des fibres susceptibles d'être mises en mouvement tourbillonnant sous l'effet d'un afflux d'air donné **caractérisé en ce que**
le sac à poussière contient, par volume de 1000 cm³, entre 1 et 30 g de fibres susceptibles d'être mises en mouvement tourbillonnant et **en ce que** ces dernières sont des mélanges de fibres chargées et/ou de fibres chargées par effet triboélectrique.

2. Sac à poussière d'aspirateur selon la revendication 1, **caractérisé en ce que** les matières susceptibles d'être mises en mouvement tourbillonnant présentent un volume massique de 5 cm³/g à 100 cm³/g.

3. Sac à poussière d'aspirateur selon la revendication 2, **caractérisé en ce que** les matières fibreuses sont des fibres chimiques et/ou des fibres naturelles.

4. Sac à poussière d'aspirateur selon la revendication 3, **caractérisé en ce que** les fibres chimiques sont des fibres cellulosiques, telles que la viscose, et/ou des fibres synthétiques.

5. Sac à poussière d'aspirateur selon la revendication 4, **caractérisé en ce que** les fibres synthétiques sont sélectionnées parmi des fibres de polyoléfines, de polyester, de polyamides, de polyacrylonitrile et/ou de poly(alcool vinylique).

6. Sac à poussière d'aspirateur selon la revendication 3, **caractérisé en ce que** les fibres naturelles sont sélectionnées parmi les fibres de cellulose, les fibres de bois, les fibres de kapok, les fibres de lin, les fibres de jute, les fibres de chanvre de Manille, les fibres de coco, les fibres de laine, les fibres de coton, les fibres de kénaf, les fibres d'abaca, les filasses de liber de mûrier à papier et/ou la pâte fluff.

7. Sac à poussière d'aspirateur selon au moins l'une quelconque des revendications 1 à 6, **caractérisé en ce que** les fibres sont à surface lisse, de structure ramifiée, compressées, creuses et/ou texturisées et/ou de section non circulaire (par exemple de section trilobée).

8. Sac à poussière d'aspirateur selon au moins l'une quelconque des revendications 1 à 7, **caractérisé en ce que** les fibres présentent une longueur moyenne comprise entre 0,3 mm et 100 mm, de préférence entre 0,5 et 20 mm.

9. Sac à poussière d'aspirateur selon la revendication 8, **caractérisé en ce que** les fibres présentent une longueur moyenne de 1 à 9,5 mm.

10. Sac à poussière d'aspirateur selon au moins l'une quelconque des revendications 1 à 9, **caractérisé en ce que** les matières susceptibles d'être mises en mouvement tourbillonnant sont chargées électrostatiquement.

11. Sac à poussière d'aspirateur selon au moins l'une quelconque des revendications 1 à 10, **caractérisé en ce que** le sac d'aspirateur est dimensionné et conçu de sorte qu'il puisse être traversé par un courant volumique compris entre 10m³/h et 400 m³/h.

12. Sac à poussière d'aspirateur selon au moins l'une quelconque des revendications 1 à 11, **caractérisé en ce que** dans un volume de 1000cm³ sont contenues 5 à 15 g de matières susceptibles d'être mises en mouvement tourbillonnant.

13. Sac à poussière d'aspirateur selon au moins l'une quelconque des revendications 1 à 12, **caractérisé en ce que** la matière filtrante est constituée
d'une matière uni-couche ou multicouche en papier et/ou en une matière textile de toison.

14. Procédé pour prolonger la durée de vie d'un sac à poussière d'aspirateur, qui fonctionne avec un courant volumique prédéfini, **caractérisé en ce qu'**il est mis en oeuvre avec un sac à poussière d'aspirateur selon au moins l'une quelconque des revendications 1 à 13.
